# EUROPEAN PATENT SPECIFICATION

(11) **EP 2 985 101 B1**
(45) Date of publication and mention of the grant of the patent: **03.06.2020**
(21) Application number: 15177267.0
(22) Date of filing: 17.07.2015
(51) Int. Cl.: B23D 47/04

(54) **A CHOP SAW**
KAPPSÄGE
SCIE PIVOTANTE

(30) Priority: 18.07.2014 IN 2044DEN2014
(43) Date of publication of application: 17.02.2016
(73) Proprietor: Black & Decker, Inc., Newark, DE 19711 (US)
(72) Inventor: Shahane, Dhananjay Purushottam, 411038 Pune (IN); Mohite, Vikramsinh, 411046 Pune (IN)
(74) Representative: SBD IPAdmin

(56) References cited:
- US-A- 5 042 346
- US-A- 5 483 858
- US-A- 5 720 096
- US-A1- 2005 115 376
- US-A1- 2007 295 182
- US-A1- 2009 224 454
- US-B1- 6 422 115

## Description

The present invention relates to a chop saw.

A reference is made to US5720096 which discloses a typical chop saw. This Patent relates to a locking fence for a power tool such as a chop saw, or for a work surface of a workbench, which is capable of being moved to a selected location on the chop saw base or work surface and oriented at a selected angular orientation relative to the chop saw blade. The fence is locked simultaneously in such location and orientation when an operator rotates a cam actuator to lift a first clamping member away from the fence, which in turn draws a second clamping member into clamping engagement with the underside of a workpiece support of the base, and which further forces a cam portion of the actuator against the fence. No tools are required to lock or unlock the fence. The fence defines an arcuate slot for enabling the angular orientation to be adjusted. The arcuate slot is maintained in juxtaposition to a slot formed in the work surface for enabling movement of the fence to its selected location on the workpiece support or work surface, by linking screws linking the slots.

A chop saw comprises a base. A motor unit is attached to one end of an end of an arm which is pivotally mounted at the other end to a rear edge of the base. The motor unit comprises an electric motor which rotationally drives a circular saw blade mounted on a spindle which projects from the motor unit. The motor unit is biased to an upper position by a spring. The motor unit can be pivoted downwards towards the base by an operator grasping a handle attached to the motor unit and urging it downwards against the biasing force of the spring. The motor is activated by operator using a switch mounted on the handle, the motor being typically powered by a mains electricity supply. The work piece to be cut is placed on the base against a fence located towards the rear of the base. The work piece may be clamped against the fence using an adjustable clamp. Such clamps are attached to the base. Guards, attached to the motor unit, may surround part or all of the blade. A guard actuation mechanism may be utilized in order to retract the guards when the motor unit is pivoted downwardly.

US2009/0224454 discloses the chop saw according to the preamble of claim 1. US2007/0295182, US5483858 and US2005/0115376 all disclose saws having a base, a motor unit pivotally, mounted on the base, a fence which transverses the base and an adjustable clamp which cooperates with the fence to hold a work piece on the base in order for it to be cut by the blade of the motor unit.

Accordingly, the present invention provides a chop saw in accordance with claim 1.

In an embodiment of the present invention there are two parallel rows of five slots (14).

In another embodiment of the present invention the clamp (16) further comprises a jaw(56) which engages a work piece when it the clamp (16) is co-operating with the fence(8) to hold a work piece wherein the jaw (56) comprises a V shaped groove (66) which is capable of engaging the work piece.

In yet another embodiment of the present invention the jaw(56) is capable of being moved relative to the frame (18).

In still another embodiment of the present invention the jaw (56) is pivotally and slideably mounted on a threaded rod (62, 44, 42) which is mounted on the frame (18).

In yet another embodiment of the present invention the threaded rod comprises a hex shaped aperture (62) in which a hex key (64) can be inserted to rotate the threaded rod within the threaded support.
Figure 1A shows a perspective view of the base together with the fence and clamp of a chop saw in accordance with an embodiment of the present invention but with the motor unit, saw blade, guards, handle and pivot arm removed;
Figure 1B shows a top view of the base, fence and clamp in Figure 1A;
Figure 1C shows a side view of the base, fence and clamp in Figure 1A;
Figure 1D shows an underside view of the base, fence and clamp in Figure 1A;
Figure 2A shows a perspective view of the clamp in Figure 1A;
Figure 2B shows a side view of the clamp in Figure 2A;
Figure 3A shows a perspective view of the handle of the chop saw;
Figure 3B shows a vertical cross of a side arm of the handle in the directions of Arrows B in Figure 3A; and
Figure 4 shows the electric circuit of the chop saw.

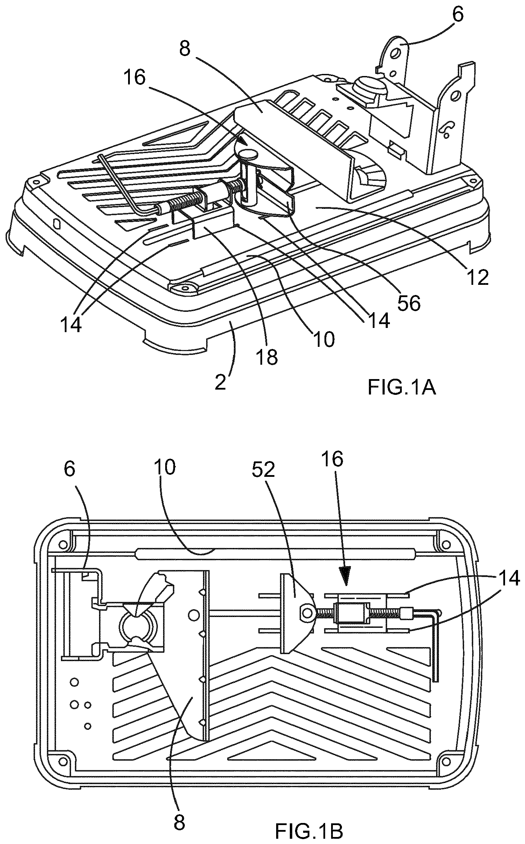

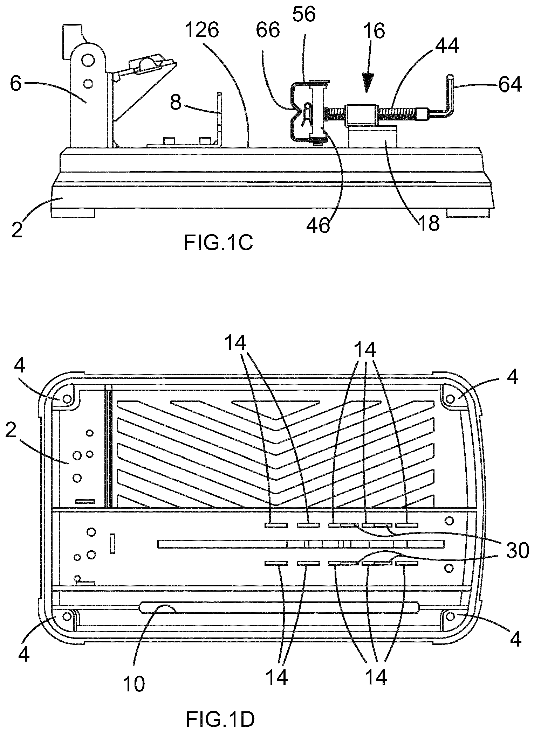

Referring to Figure 1A to 1D, the base 2 of the chop saw is made from a sheet metal which is formed into a rectangular box like structure having an opening facing downwardly. Located at each corner of the opening is a rubber foot 4, the base 2 being supported on the four feet 4 when placed on a work surface.

Rigidly mounted on the rear of the base 2 is a pivot mount 6. A pivot arm (not shown,) which is attached to the motor unit (not shown), pivotally attaches to the pivot mount 6 when the chop saw is fully assembled. A spring (not shown,) which biases the pivot arm to its highest position, is mounted within the pivot mount 6 when the saw is fully assembled.

The top surface 12 of the base 2 is generally flat and forms a surface on which a work piece is placed in order for it to be cut. An elongate slot 10 is formed through the base 2 along one side of the base 2. The slot 10 allows the edge cutting blade to pass through the base 2 without touching the base 2 and into the space enclosed by the base 2 when cutting a work piece.

A fence 8 is attached to the rigidly top surface of the base 2 and extends across the base 2 in well known manner.

Formed through the top surface 12 of the base in a length wise direction are two sets of five slots 14, all ten slots 14 having the same dimensions as each other. The slots 14 in each set are in alignment with each other and extend, in a lengthwise direction, in the same direction as each other to form a line. Adjacent slots 14 in each set are separated by the same distance. The line formed by each set is parallel to the line of the other set, each of the slots 14 in each being located adjacent and in alignment with a corresponding slot 14 in the other set, forming five parallel pairs of slots 14. The slots 14 are use to attach a clamp 16 to the base 2 at differing positions.

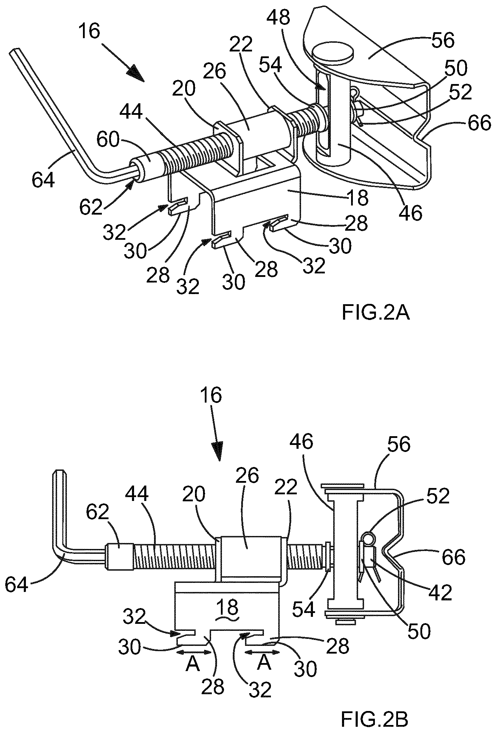

The construction of the clamp will now be described with reference to Figures 2A and 2B.

The clamp 16 comprises a U shaped frame 18 made from sheet metal. Two sections 20, 22 of the top surface 24 of the frame 18 project upwardly in a vertical direction, parallel to each other. Located between and rigidly attached to the two sections 20, 22 is a tubular support 26. The tubular support has a threaded passageway formed though its entire length. Apertures are formed through the two sections 20, 22 to expose the two entrances of the passageway at each end.

Formed on the base of each side of the frame 18 are two L shaped pegs 28, all of the pegs 28 having the same dimensions as each other. The base 30 of the pegs 28 extend rearwardly and in parallel with each other. The length (Arrow A) of the bases 30 of the pegs 28 is slightly smaller than that of the slots 14 in the base. The width of the pegs 28 is slightly less than the width of the slots. The distance between the two pegs 28 on each side of the U shaped frame 18 is the same as the distance between adjacent slots 14 in each set. The width of the peg slots 32 form by the pegs 28 is slightly greater than the thickness of the sheet metal forming the base 2. The distance between the pegs 28 on one side of the U shaped frame 18 in relation to the pegs on the other is the same as the distance between the two sets of slots 14.

Mounted within the threaded passageway of the tubular support 26 is a rod having a threaded central section 44. Rotation of the rod within the passageway results axial movement of the rod relative to the tubular support 26. The front section 42 of the rod is formed with a smooth surface with a diameter less than that of the threaded section 44. A first washer 54 is mounted on the front section 42 abuts against the threaded section 44. An axle 46, having an elongate slot 48 formed through it in a lengthwise direction, is mounted on the front section 42, the front section 42 passing the elongate slot 48. A second washer 50 in mounted on the end of the front section 42, the axle being sandwiched between the two washers 50. A split pin 52 passes through a hole formed through the end of the front section 42, the ends of the split pin 52 being splayed to prevent the pin 52 from being removed from the hole. The split pin 52 stops the washers 50, 54 and axle 46 from falling off the front section 42. The axle 46 can rotate around the front section 42 or axially slide on the front section 42 due to the elongate slot. The ends of a C shaped bracket 56, made from sheet metal, are pivotally attached to ends of the axle 46. A V shaped groove 58 is formed along the front of the bracket 56. The rear section 60 of the rod comprises a hex shaped recess 62. A hex key 64 can be inserted into the hex shaped recess 62 and use to rotate the rod about its longitudinal axis.

In use, the four pegs 28 are inserted into four slots 14 in the base 2, two adjacent slots 14 from each set. As there are five pairs of two slots 14 in the lengthwise direction along the base 2, and the clamp 16 requires fours slots 14, the pegs 28 can be inserted in four different positions at varying distances from the fence 8. The particular slots 14 are chosen depending on the desired position of the clamp 16 in relation to the fence 8 which is determined by the size of the work piece to be cut. Once inserted, the frame 18 is slid backwards so that the base 2 at the rear edge of the slot 14 enters the peg slot 32 of the peg 28 located within it to secure the frame 18 to the base 2. The work piece is located between the front of the C shaped bracket 56 and the fence 8. The orientation of the C shaped bracket 56 can be adjusted by its rotation around the front section 42 of the rod. Furthermore, the location of the C shaped bracket 56 can be altered relative to the rod in a direction perpendicular to the rod by sliding the front section 42 of the rod along the elongate slot 48 of the axle 46. Once in the desired position, the rod is rotated using the hex key 64 to move the C shaped bracket 56 towards the work piece. The work piece is sandwiched between the C shape bracket 56 and the fence 8 where it is held. The shape of the pegs 28 ensure that the base2 is urged into and held within the peg slots 32, thus ensuring the clamp 16 is secured to the base2 during the clamping operation. The operator can then perform a chop cut on the work piece. The V shaped groove 66 assists in holding an object when it is circular in shape eg a pipe, as the circular side of the object engages the groove 66. The work piece is then released by rotating the rod in the opposite direction using the hex key 64.

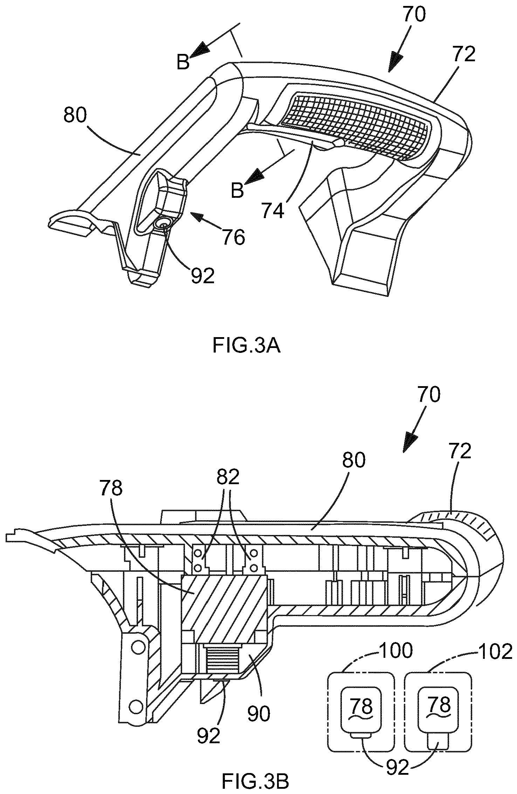

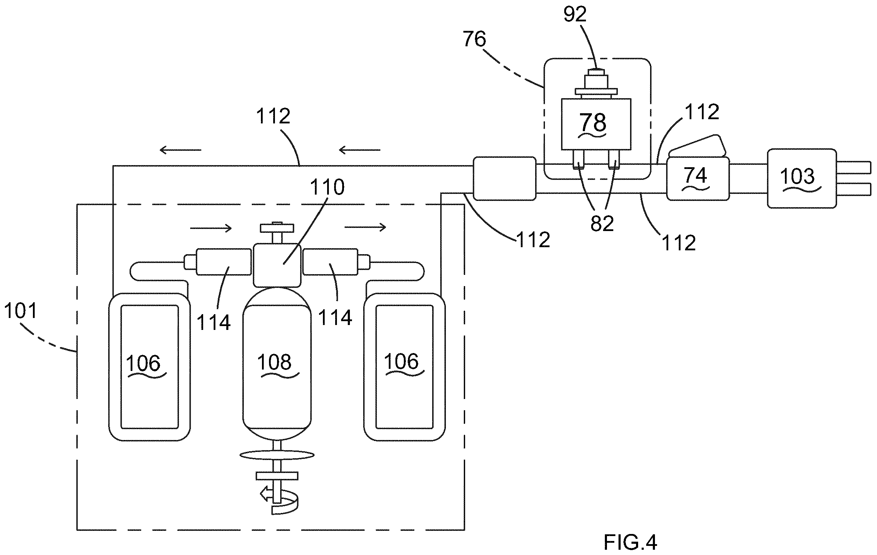

Figures 3A and 3B show the handle 70 of the chop saw. Figure 4 shows the electric circuit of the chop saw. The handle 70 is attached to the motor unit and is used by the operator to pivot the motor unit towards the base 2. The handle 70 comprises a grasp 72 by which the operator holds the handle 70. Mounted within the grasp 72 is an ON/OFF switch 74, depression of which activates the electric motor 101 of the saw to rotationally drive the saw blade, when the saw is connected to a mains power supply via a plug 103. During the use of the saw, the operation depresses the ON/OFF switch 74 whilst holding the grasp 72 of the handle 70 to activate the motor 101 and then pivots the motor unit towards the base 2 whilst maintaining the depression of the ON/OFF switch 74, in order to cut the work piece. This ensures the hand of the operator remains on the grasp 72 of the handle 70 whilst cutting a work piece.

The ON/OFF switch 74 is in electrical connection with the motor 101.The motor 101 comprises two stator coils 106, an armature 108, with a commutator 110 and brushes 114, and connects to the ON/OFF switch 74 via cables 112. Located within the circuit between the ON/OFF switch 74 and the electric motor is an overload switch 76. The overload switch 76 provides protection for the motor 101 by breaking the circuit when too much current is drawn by the motor 101 due excessive loads. This helps prevent the armature 108 of the motor from overheating.

The overload switch 76 comprises a main housing 78 which is mounted within a pocket 90 formed in a side arm 80 of the handle 70. Two metal tabs 82 project into the handle which can be connected, typically by soldering, to the electric cables 112 which form the electric circuit between the ON/OFF switch 74 and the electric motor 101. The overload switch 76 forms part of the electrical circuit. A reset button 92 is mounted in an aperture formed in the side of the housing 78 and projects from the underside of the handle 70 so that it is accessible by the operator. In normal operation, the reset button 92 is located in an inward position as shown by the insert drawing 100 in Figure 3B.

The main housing 78 comprises a bimetallic strip through which the current for the motor passes. The bimetallic strip is heated when current passes through it. When the amount of current exceeds a predetermined value (12Amps to 12.5 Amps in the present embodiment), the bimetallic strip breaks the circuit, disconnecting the motor from the current source. When the bimetallic strip breaks the circuit, it causes a manual reset button 92 to pop out from the main housing (as shown in insert drawing 102 in Figure 3B), indicating that the bimetallic strip has broken the circuit. Once the bimetallic strip has cooled down sufficiently (typically 30 seconds to a minute), the operator is able to reactivate the overload switch by depressing the button 92 to reconnect the bimetallic strip with the rest of the circuit allowing the motor 101 to be switched on again. If the button 92 is depressed too soon for the bimetallic strip to have cooled down, the button 92 will not remained depressed once the pressure applied to it has been removed.

## Claims

1. A chop saw comprising:
a base (2) made from sheet metal which is formed into a rectangular box like structure having an opening facing downwardly which has a work surface (12);
a motor unit pivotally mounted on the base (12);
a fence (8) mounted on the base which traverses the work surface (12);
an adjustable clamp (16) comprising a frame (18) which is capable of being releasably attached to the work surface (12) in a number of locations on the work surface (12), wherein the clamp (16) is capable of co-operating with the fence (8) to secure a work piece to be cut on the work surface (12);
wherein the work surface (12) comprises a plurality of slots (14);
wherein the frame (18) comprises at least one peg (28) which is capable of engaging with and being held within one of the slots (14) when the clamp (16) is co-operating with the fence (8) to hold a work piece;
**characterized in that** the frame comprises a U shaped frame (18) made from sheet metal; wherein there are two parallel rows of slots (14) which extend in a forward and reverse direction across the work surface (12), each slot (14) in one row being aligned with a slot (14) in the other row
wherein the frame (18) comprises four pegs (28) which are arranged in pairs in two parallel rows and which are capable of engaging with four slots (14), two in each row of slots (14);
wherein, formed on the base of each side of the frame (18) are two L shaped pegs (28) having the same dimensions as each other;
wherein the pegs (28) comprise bases (30) and peg slots (32), the bases (30) of the pegs (28) extending rearwardly and in parallel with each other, wherein a part of the base (2) which forms the rear edge of a slot (14) locates within the peg slot (32) when the peg is located in and held within that slot (14), the width of the peg slot (32) formed by the pegs (28) being slightly greater than the thickness of the sheet metal forming the base (2).

2. A chop saw according to claim 1 wherein there are two parallel rows of five slots (14).

3. A chop saw according to any of the previous claim 1 wherein the clamp (16) further comprises a jaw(56) which engages a work piece when it the clamp (16) is co-operating with the fence(8) to hold a work piece wherein the jaw (56) comprises a V shaped groove (66) which is capable of engaging the work piece.

4. A chop saw according to claim 3 wherein the jaw(56) is capable of being moved relative to the frame (18).

5. A chop saw according to claim 4 wherein the jaw (56) is pivotally and slideably mounted on a threaded rod (62, 44, 42) which is mounted within a threaded shaft within a support (26)mounted on the frame (18).

6. A chop saw according to claim 5 wherein the threaded rod comprises a hex shaped aperture (62) in which a hex key (64) can be inserted to rotate the threaded rod within the threaded support.

## Patentansprüche

1. Kappsäge, umfassend:
eine Basis (2), die aus Blech hergestellt ist, das in einer rechteckigen kastenartigen Anordnung gebildet ist, die eine nach unten zeigende Öffnung aufweist, die eine Arbeitsfläche (12) aufweist;
eine Motoreinheit, die schwenkbar an der Basis (12) montiert ist;
eine an der Basis befestigte Abgrenzung (8), die die Arbeitsfläche (12) durchquert;
eine anpassbare Klemme (16), die einen Rahmen (18) umfasst, der im Stande ist, lösbar an der Arbeitsfläche (12) in einer Zahl von Positionen an der Arbeitsfläche (12) befestigt zu sein, wobei die Klemme (16) im Stande ist, mit der Abgrenzung (8) zusammenzuwirken, um ein zu schneidendes Werkstück an der Arbeitsfläche (12) zu sichern;
wobei die Arbeitsfläche (12) eine Vielzahl von Schlitzen (14) umfasst;
wobei der Rahmen (18) mindestens einen Stift (28) umfasst, der im Stande ist mit einem der Schlitze (14) einzugreifen und darin gehalten zu werden, wenn die Klemme (16) mit der Abgrenzung (8) zusammenwirkt, um ein Werkstück zu halten;
**dadurch gekennzeichnet, dass** der Rahmen einen U-förmigen Rahmen (18) umfasst, der aus Blech hergestellt ist;
wobei es zwei parallele Reihen von Schlitzen (14) gibt, die sich in einer Vorwärts- und Rückwärtsrichtung über die Arbeitsfläche (12) erstrecken, wobei jeder Schlitz (14) in einer Reihe mit einem Schlitz (14) in der anderen Reihe ausgerichtet ist
wobei der Rahmen (18) vier Stifte (28) umfasst, die in Paaren in zwei parallelen Reihen angeordnet sind und die im Stande sind, mit vier Schlitzen (14) einzugreifen, zwei in jeder Reihe von Schlitzen (14);
wobei an der Basis jeder Seite des Rahmens (18) zwei L-förmige Stifte (28) gebildet sind, die dieselben Abmessungen aufweisen;
wobei die Stifte (28) Basen (30) und Stiftschlitze (32) umfassen, die Basen (30) der Stifte (28) sich nach hinten und parallel zueinander erstrecken, wobei ein Teil der Basis (2), der die Hinterkante eines Schlitzes (14) bildet, in dem Stiftschlitz (32) liegt, wenn der Stift in diesem Schlitz (14) liegt und darin gehalten wird, wobei die Breite des durch die Stifte (28) gebildeten Stiftschlitzes (32) knapp größer als die Dicke des Blechs ist, das die Basis (2) bildet.

2. Kappsäge nach Anspruch 1, wobei es zwei parallele Reihen von fünf Schlitzen (14) gibt.

3. Kappsäge nach einem der vorstehenden Ansprüche, wobei die Klemme (16) weiter eine Backe (56) umfasst, die mit einem Werkstück eingreift, wenn die Klemme (16) mit der Abgrenzung (8) zusammenwirkt, um ein Werkstück zu halten, wobei die Backe (56) eine V-förmige Nut (66) umfasst, die im Stande ist, mit dem Werkstück einzugreifen.

4. Kappsäge nach Anspruch 3, wobei die Backe (56) im Stande ist, relativ zu dem Rahmen (18) bewegt zu werden.

5. Kappsäge nach Anspruch 4, wobei die Backe (56) schwenkbar und schiebbar an einer Gewindestange (62, 44, 42) montiert ist, die in einem Gewindeschaft in einem Träger (26) montiert ist, der an dem Rahmen (18) montiert ist.

6. Kappsäge nach Anspruch 5, wobei die Gewindestange eine sechseckige Öffnung (62) umfasst, in der ein Inbusschlüssel (64) eingesetzt werden kann, um die Gewindestange in dem Gewindeträger zu drehen.

## Revendications

1. Scie pivotante comprenant :
une base (2) en tôle qui est formée en une structure de type boîte rectangulaire ayant une ouverture orientée vers le bas qui a une surface de travail (12) ;
une unité de moteur montée pivotante sur la base (12) ;
un guide (8) monté sur la base qui traverse la surface de travail (12) ;
une pince réglable (16) comprenant un cadre (18) qui est capable d'être attachée de manière amovible à la surface de travail (12) en un certain nombre d'emplacements sur la surface de travail (12), dans laquelle la pince (16) est capable de cofonctionner avec le guide (8) pour fixer une pièce de travail à couper sur la surface de travail (12) ;
dans laquelle la surface de travail (12) comprend une pluralité de fentes (14) ;
dans laquelle le cadre (18) comprend au moins une cheville (28) qui est capable d'engager et d'être maintenue dans l'une des fentes (14) lorsque la pince (16) coopère avec le guide (8) pour maintenir une pièce de travail ;
**caractérisée en ce que** le cadre comprend un cadre en U (18) fabriqué en tôle ;
dans laquelle il y a deux rangées parallèles de fentes (14) qui s'étendent vers l'avant et vers l'arrière à travers la surface de travail (12), chaque fente (14) d'une rangée étant alignée avec une fente (14) de l'autre rangée
dans laquelle le cadre (18) comprend quatre chevilles (28) qui sont disposées par paires en deux rangées parallèles et qui sont capables de s'engager avec quatre fentes (14), deux dans chaque rangée de fentes (14) ;
dans laquelle, formées sur la base de chaque côté du cadre (18), deux chevilles en L (28) ont les mêmes dimensions l'une que l'autre ;
dans laquelle les chevilles (28) comprennent des bases (30) et des fentes de cheville (32), les bases (30) des chevilles (28) s'étendant vers l'arrière et parallèlement les unes aux autres, dans laquelle une partie de la base (2) qui forme le bord arrière d'une fente (14) se situe à l'intérieur de la fente de cheville (32) lorsque la cheville est située dans et maintenue à l'intérieur de cette fente (14), la largeur de la fente de cheville (32) formée par les chevilles (28) étant légèrement plus grande que l'épaisseur de la tôle formant la base (2).

2. Scie pivotante selon la revendication 1, dans laquelle il y a deux rangées parallèles de cinq fentes (14).

3. Scie pivotante selon l'une quelconque des revendications précédentes, dans laquelle la pince (16) comprend en outre une mâchoire (56) qui engage une pièce de travail lorsque la pince (16) coopère avec le guide (8) pour maintenir une pièce de travail dans laquelle la mâchoire (56) comprend une rainure en V (66) qui est capable d'engager la pièce de travail.

4. Scie pivotante selon la revendication 3, dans laquelle la mâchoire (56) peut être déplacée par rapport au cadre (18).

5. Scie pivotante selon la revendication 4, dans laquelle la mâchoire (56) est montée pivotante et coulissante sur une tige filetée (62, 44, 42) qui est montée à l'intérieur d'un arbre fileté à l'intérieur d'un support (26) monté sur le cadre (18).

6. Scie pivotante selon la revendication 5, dans laquelle la tige filetée comprend une ouverture hexagonale (62) dans laquelle une clé hexagonale (64) peut être insérée pour faire tourner la tige filetée à l'intérieur du support fileté.
